# EUROPÄISCHE PATENTSCHRIFT

(11) **EP 2 829 213 B1**
(45) Veröffentlichungstag und Bekanntmachung des Hinweises auf die Patenterteilung: **15.03.2017**
(21) Anmeldenummer: 14175468.9
(22) Anmeldetag: 02.07.2014
(51) Int. Cl.: A47L 9/24

(54) **Staubsauger-Saugrohr**
Vacuum cleaner suction hose
Tuyau d'aspiration pour aspirateur

(30) Priorität: 05.07.2013 DE 102013213212
(43) Veröffentlichungstag der Anmeldung: 28.01.2015
(73) Patentinhaber: fischer Rohrtechnik GmbH, 77855 Achern-Fautenbach (DE)
(72) Erfinder: Cordes, Martin, 59846 Sundern (DE); Cordes, Stephan, 59821 Arnsberg (DE)
(74) Vertreter: Gesthuysen Patent- und Rechtsanwälte

(56) Entgegenhaltungen:
- DE-A1- 19 706 210
- DE-U1- 29 520 214
- US-A- 5 692 782

## Beschreibung

Die vorliegende Erfindung betrifft ein Staubsauger-Saugrohr mit mindestens einem Innenrohr und mindestens einem Außenrohr, wobei das Innenrohr eine Mehrzahl von Rastvertiefungen aufweist, wobei am Außenrohr ein Betätigungsmechanismus angeordnet ist, wobei der Betätigungsmechanismus mindestens eine Griffschale, ein Rückstellmittel, ein Klemmelement und zwei Klemmkeile umfasst, wobei die Griffschale in Längsrichtung des Staubsauger-Saugrohrs verschiebbar gehalten ist, so dass die Griffschale aus einer Verriegelungsposition in mindestens eine Entriegelungsposition bewegbar ist, wobei das Klemmelement in der Verriegelungsposition der Griffschale die Klemmkeile im Eingriff mit den Rastvertiefungen am Innenrohr hält, wobei in der Entriegelungsposition eine Verschiebung des Innenrohrs relativ zum Außenrohr durch die Klemmkeile freigegeben ist, und wobei das Rückstellmittel bei einer Auslenkung der Griffschale aus der Verriegelungsposition eine Rückstellkraft zur Rückstellung der Griffschale in die Verriegelungsposition ausübt.

Staubsauger-Saugrohre sind im Stand der Technik in einer Vielzahl von Ausgestaltungen bekannt. Staubsauger-Saugrohre umfassen üblicherweise mindestens zwei Rohre, die relativ zueinander verschiebbar sind, wodurch die Länge des Staubsauger-Saugrohrs einstellbar ist. Dabei ist häufig mindestens ein Innenrohr und mindestens ein Außenrohr vorhanden, wobei das Innenrohr in das Außenrohr eingeschoben ist. Die Außenkontur des Innenrohrs entspricht im Wesentlichen der Innenkontur des Außenrohrs. Das Innenrohr weist dabei in seiner Oberfläche Rastvertiefungen auf, die mit einem am Außenrohr gehaltenen Betätigungsmechanismus zusammenwirken, beispielsweise indem Klemmkeile des Betätigungsmechanismus im Eingriff mit den Rastvertiefungen stehen und dadurch eine Bewegung des Innenrohrs relativ zum Außenrohr blockieren. Eine Bewegung des Innenrohrs relativ zum Außenrohr zum Einstellen der Länge des Staubsauger-Saugrohres wird dann ermöglicht, wenn die Klemmkeile aus dem Eingriff mit den Rastvertiefungen heraustreten oder aus diesen mit nur geringem Widerstand durch ausüben einer Verschiebekraft durch einen Benutzer herausschiebbar sind.
Die DE 295 20 214 U1 offenbart beispielsweise ein teleskopierbares Staubsauger-Saugrohr mit einem Schieber, der aus einer Verriegelungsposition in eine Entriegelungsposition verschiebbar ist. Der Schieber hebt ein Klemmelement an, so dass die vorhandenen Klemmkeile durch die von einem Benutzer auf die Rohre aufgebrachte Kraft aus den Rastvertiefungen im Innenrohr herausgedrückt werden und so eine Verschiebbarkeit des Innenrohrs relativ zum Außenrohr gewährleistet ist.
Die DE 197 06 210 A1 zeigt ein teleskopierbares Staubsauger-Saugrohr mit einem Innenrohr und einem Außenrohr. Am Außenrohr ist ein Verriegelungsmechanismus angeordnet, der eine in Längsrichtung des Staubsauger-Saugrohres verschiebbare Handhabe umfasst. Durch ein Verschieben der Handhabe in Längsrichtung des Staubsauger-Saugrohrs wird ein Sperrelement aus dem Eingriff mit am Innenrohr vorgesehenen Rastvertiefungen gehoben.
Die US 5 692 782 A offenbart ebenfalls ein teleskopierbares Staubsauer-Saugrohr mit einem Innen- und einem Außenrohr. Das Innenrohr weist Rastvertiefungen auf. Am Außenrohr kann mit einem manuell betätigbaren Schieber ein Rastelement betätigt werden, das in die Rastvertiefungen eingreift. Das Rastelement wird durch eine Feder in eine Lage zwischen Innen- und Außenrohr gebracht, dass es durch die Friktion zwischen einen im Außenrohr befestigten Führungskörper und der im Innenrohr befindlichen Rastvertiefung in den Spalt zwischen beide Rohre hineingezogen wird.

Die aus dem Stand der Technik bekannten Staubsauger-Saugrohre weisen den Nachteil auf, dass der Betätigungsmechanismus leicht blockiert.

Ausgehend von dem vorgenannten Stand der Technik liegt der vorliegenden Erfindung die Aufgabe zugrunde, ein Staubsauger-Saugrohr mit einem Betätigungsmechanismus anzugeben, der ein minimiertes Risiko der Blockade aufweist.

Die vorgenannte Aufgabe ist zunächst und im Wesentlichen bei einem erfindungsgemäßen Staubsauger-Saugrohr dadurch gelöst, dass das Klemmelement formschlüssig mit den Klemmkeilen verbunden ist, so dass beide Klemmkeile gleichzeitig durch eine Bewegung des Klemmelements bewegbar sind, und dass das Klemmelement mit der Griffschale in Verbindung steht, so dass durch ein Verschieben der Griffschale aus der Verriegelungsposition das Klemmelement von der Längsachse des Staubsauger-Saugrohrs weg bewegt wird, und dass durch eine Bewegung des Klemmelements von der Längsachse des Staubsauger-Saugrohrs weg die beiden Klemmkeile gleichzeitig aus dem Eingriff mit den Rastvertiefungen gehoben werden, wodurch eine Verschiebbarkeit des Innenrohrs relativ zum Außenrohr freigegeben wird. Das Staubsauger-Saugrohr ist dadurch teleskopierbar, d. h. bezüglich seiner Länge veränderbar. Nach der Freigabe der Verrastung zwischen Innenrohr und Außenrohr durch den Betätigungsmechanismus ist nämlich das Innenrohr innerhalb des Außenrohrs verschiebbar.

Der Betätigungsmechanismus umfasst eine Griffschale, die vom Benutzer mit einer Hand bedient werden kann. Die Griffschale ist in der Längsrichtung des Staubsauger-Saugrohrs verschiebbar am Außenrohr gehalten. Die Griffschale ist ohne die Betätigung durch einen Benutzer in einer Verriegelungsposition, wobei die Griffschale vorzugsweise in Längsrichtung des Staubsauger-Saugrohrs, also in zwei Richtungen, in jeweils eine Entriegelungsposition bewegbar ist. Zur Handhabung des Betätigungsmechanismus wird das Staubsauger-Saugrohr beispielsweise durch einen Benutzer an der Griffschale und am Innenrohr gegriffen, wobei das Innenrohr nach Verschieben der Griffschale aus der Verriegelungsposition sowohl in das Außenrohr einschiebbar als auch aus dem Außenrohr herausziehbar ist, vorteilhaft erfolgt ein Verschieben in die entgegengesetzte Richtung zu der Richtung, in die eine Verschiebung der Griffschale erfolgt ist.

Der Betätigungsmechanismus umfasst ein Rückstellmittel, das derart auf die Griffschale einwirkt, dass diese aus vorzugsweise beiden Entriegelungspositionen stets in die Verriegelungsposition zurückgestellt wird, so dass der Benutzer die Griffschale stets entgegen einer Rückstellkraft des Rückstellmittels aus der Verriegelungsposition bewegt. Das Rückstellmittel stützt sich dazu beispielsweise als Gegenlager mittelbar oder unmittelbar am Außenrohr ab.

Der Betätigungsmechanismus umfasst ferner mindestens ein Klemmelement und mindestens zwei Klemmkeile, die vorzugsweise innerhalb der Griffschale angeordnet sind, d. h. von der Griffschale umgeben werden. In der Verriegelungsposition der Griffschale werden die Klemmkeile durch das Klemmelement im Eingriff mit den Rastvertiefungen am Innenrohr gehalten, so dass eine Verschiebung des Innenrohrs relativ zum Außenrohr durch den formschlüssigen Eingriff der Klemmkeile in die Rastvertiefungen des Innenrohrs blockiert ist. Das Klemmelement ist formschlüssig mit den Klemmkeilen verbunden, so dass bei einer Bewegung des Klemmelements stets gleichzeitig auch die Klemmkeile, ein erster Klemmkeil und ein zweiter Klemmkeil, bewegt werden. Beide Klemmkeile folgen einer Bewegung des Klemmelements.

Das Klemmelement ist zudem mit der Griffschale verbunden bzw. steht mit der Griffschale in Verbindung, so dass das Klemmelement bei einem Verschieben der Griffschale aus der Verriegelungsposition in eine Entriegelungsposition, insbesondere in einer Richtung senkrecht zur Längsrichtung des Staubsauger-Saugrohrs, von der Längsachse des Staubsauger-Saugrohr weg bewegt wird.

Durch die Verbindung des Klemmelements mit der Griffschale führt ein Verschieben der Griffschale stets dazu, dass auch das Klemmelement bewegt wird. Dabei wird das Klemmelement insbesondere von dem Staubsauger-Saugrohr weg bewegt. Durch die Bewegung des Klemmelements in einer Richtung weg von der Längsachse des Staubsauger-Saugrohrs, insbesondere in einer Richtung senkrecht zur Längsachse des Staubsauger-Saugrohrs, werden die beiden Klemmkeile zusammen mit dem Klemmelement bewegt, nämlich gleichzeitig aus dem Eingriff mit den Rastvertiefungen gehoben, wodurch eine Verschiebbarkeit des Innenrohrs relativ zum Außenrohr freigegeben wird. Dabei wird der formschlüssige Eingriff der Klemmkeile mit den Rastvertiefungen aufgehoben, wenn sich die Griffschale in einer Entriegelungsposition befindet. Die Klemmkeile werden dabei ebenfalls von der Längsachse des Staubsauger-Saugrohrs weg bewegt.

Wird die Griffschale in der Entriegelungsposition losgelassen, sind aber keine Rastvertiefungen so positioniert, dass die Klemmkeile unmittelbar einrasten können, werden diese unter Federspannung gehalten und rasten nach einer Relativbewegung des Innenrohrs zum Außenrohr in die nächsten verfügbaren Rastvertiefungen im Innenrohr ein. Die Griffschale und das Klemmelement wirken vorzugsweise derart zusammen, dass eine Bewegung des Klemmelements in der Verriegelungsposition der Griffschale ebenfalls durch die Griffschale blockiert ist, wodurch auch ein Bewegen den Innenrohrs relativ zum Außenrohr blockiert ist.

Das Staubsauger-Saugrohr weist den Vorteil auf, dass eine Freigabe der Verrastung zwischen Innenrohr und Außenrohr in zwei verschiedene Richtungen erfolgen kann, nämlich durch Verschieben der Griffschale in eine beliebige Richtung in Längsrichtung des Staubsauger-Saugrohrs. Die Bewegung des Klemmkeils folgt dabei der Bewegung des Klemmelements, so dass stets eine vollständige Freigabe der Verriegelung erfolgt, ohne dass die Klemmkeile über die Oberfläche des Innenrohrs schleifen.

Insbesondere um das Zusammenwirken der bewegten Bauelemente des Betätigungsmechanismus zu verbessern, ist gemäß einer ersten Ausgestaltung vorgesehen, dass der Betätigungsmechanismus zusätzlich eine Klemmfeder umfasst, und dass eine Bewegung des Klemmelements von der Längsachse des Staubsauger-Saugrohrs weg entgegen der Kraft der Klemmfeder erfolgt. Die Klemmfeder ist dazu derart angeordnet, dass sie vorzugsweise eine senkrecht auf die Längsachse des Staubsauger-Saugrohrs gerichtete Kraft, insbesondere unmittelbar auf das Klemmelement, ausübt. Die Klemmfeder hält das Klemmelement in der Verriegelungsposition der Griffschale in seiner Klemmposition, in der die Klemmkeile im Eingriff mit den Rastvertiefungen am Innenrohr gehalten sind. Die Klemmfeder ist in dieser Position nicht zwangsläufig belastet, sondern es ist auch eine vollständige Entlastung der Feder denkbar ist, wobei eine Belastung der Feder erfolgt, sobald das Klemmelement aus der Klemmposition bewegt wird, nämlich die Griffschale aus der Verriegelungsposition bewegt wird. Alternativ dazu übt die Klemmfeder stets eine senkrecht auf die Längsachse des Staubsauger-Saugrohrs gerichtete Kraft auf das Klemmelement aus.

Um eine vorteilhafte Führung der Klemmkeile und des Klemmelements zu gewährleisten, ist gemäß einer weiteren Ausgestaltung vorgesehen, dass zwischen Griffschale und Außenrohr ein Gehäuse vorgesehen ist, und dass das Klemmelement und die beiden Klemmkeile in dem Gehäuse gehalten und geführt werden. Das Gehäuse ist zwischen der Griffschale und dem Außenrohr angeordnet und umfasst das Klemmelement und die beiden Klemmkeile. Die Anordnung der Klemmkeile und des Klemmelements innerhalb des Gehäuses führt zu einer zuverlässigen Führung der Klemmkeile und des Klemmelements.

Vorzugsweise sind die Klemmkeile innerhalb des Gehäuses an jeweils einer schrägen Ebene geführt, die auf beiden Seiten des Gehäuses in Längsrichtung des Staubsauger-Saugrohrs in Richtung der Position des Klemmelements geneigt ist. Das Klemmelement ist insbesondere zentral innerhalb des Gehäuses angeordnet. Die Klemmkeile sind vorteilhaft plattenförmig ausgebildet und weisen eine innerhalb des plattenförmigen Körpers in einem Winkel verlaufende Ausnehmung auf, in die das Klemmelement im Montagezustand zumindest teilweise eingreift. Der Winkel entspricht der Neigung der schrägen Ebenen zur Führung der Klemmkeile. Vorzugweise ist zusätzlich eine Erweiterung an dem plattenförmigen Körper ausgebildet, die eine Verlängerung mindestens einer Innenfläche der Ausnehmung darstellt und im Bezug auf den plattenförmigen Körper in dem Winkel angeordnet ist, in dem auch die Ausnehmung vorgesehen ist. Diese Erweiterung stabilisiert das mechanische Zusammenwirken zwischen Klemmelement und Klemmkeilen und verhindert insbesondere ein Blockieren.

Die Befestigung des Betätigungsmechanismus am Außenrohr wird gemäß einer weiteren Ausgestaltung dadurch vereinfacht, dass der Betätigungsmechanismus einen Führungsstutzen umfasst, und dass der Führungsstutzen endseitig in das Außenrohr eingeführt ist, insbesondere formschlüssig mit dem Außenrohr verrastet ist. Zur Befestigung des Führungsstutzens ist das Außenrohr vorzugsweise an mindestens einer Endseite lokal erweitert, so dass der Führungsstutzen in die endseitige Erweiterung des Außenrohrs einschiebbar ist. Vorteilhaft führt das Einführen des Führungsstutzens in das Außenrohr dazu, dass durch den Führungsstutzen wieder der ursprüngliche Innendurchmesser des Außenrohrs im Bereich der Erweiterung hergestellt wird, so dass das Innenrohr zuverlässig von dem Führungsstutzen geführt wird. Ferner dient der Führungsstutzen insbesondere auch der Befestigung des Gehäuses des Betätigungsmechanismus. Dazu ist im Außenrohr eine Ausnehmung vorgesehen, die zumindest teilweise von dem Gehäuse und/oder von dem Führungsstutzen durchgriffen wird, damit das Gehäuse beispielsweise formschlüssig am Führungsstutzen befestigt werden kann.

Gemäß einer weiteren Ausgestaltung des Staubsauger-Saugrohrs ist bevorzugt wenn vorgesehen ist, dass das Rückstellmittel an dem Führungsstutzen befestigt ist, insbesondere zumindest teilweise formschlüssig an dem Führungsstutzen befestigt ist. Der Führungsstutzen ist endseitig in das Außenrohr eingeschoben, so dass vorteilhaft auch das Rückstellmittel innerhalb des Außenrohrs angeordnet ist, sofern dieses am Führungsstutzen befestigt ist. Zur Interaktion des Rückstellmittels mit der Griffschale weist das Außenrohr beispielsweise eine Ausnehmung auf, durch die das Rückstellmittel und die Griffschale zusammenwirken können. Das Rückstellmittel ist vorzugsweise formschlüssig an dem Führungsstutzen befestigt, beispielsweise indem es zumindest teilweise in eine Ausnehmung innerhalb des Führungsstutzens eingelassen oder an einem Klemmvorsprung angeordnet und dort formschlüssig gehalten wird.

Als besonders vorteilhaft hat sich ferner gemäß einer weiteren Ausgestaltung herausgestellt, wenn vorgesehen ist, dass an der Griffschale ein Stellvorsprung vorgesehen ist, dass der Stellvorsprung das Außenrohr in einer Ausnehmung durchgreift, und dass der Stellvorsprung mit dem im Außenrohr angeordneten Rückstellmittel zusammenwirkt. Die Griffschale weist einen Stellvorsprung auf, der vorzugsweise einstückig mit der Griffschale ausgebildet ist. Der Stellvorsprung erstreckt sich beispielsweise ausgehend von der Griffschale senkrecht in Richtung der Mittelachse - der Längsachse - des Staubsauger-Saugrohrs und weist eine Länge auf, die ausreichend ist, um mit dem am Führungsstutzen angeordneten Rückstellmittel zusammenzuwirken. Insbesondere greift der Stellvorsprung formschlüssig in das Rückstellmittel ein, so dass eine vorteilhafte Kraftübertragung zwischen Rückstellmittel und Griffschale möglich ist. Beispielsweise ist eine separate Ausnehmung vorgesehen, in der der Stellvorsprung das Außenrohr durchgreift und eine separate Ausnehmung, in der der Führungsstutzen und/oder ein eventuell vorhandenes Gehäuse das Außenrohr durchgreift.

Zur Gewährleistung einer ausreichenden Rückstellkraft beim Verschieben der Griffschale aus der Verriegelungsposition, ist gemäß einer weiteren Ausgestaltung vorgesehen, dass das Rückstellmittel als mindestens eine Blattfeder ausgebildet ist, insbesondere als mindestens eine bogenförmige Blattfeder, die senkrecht zu ihrer Bogenform beansprucht wird. Die Bogenfeder ist vorzugsweise innerhalb des Führungsstutzens angeordnet und zumindest teilweise formschlüssig an dem Führungsstutzen befestigt. Eine Blattfeder, d. h. eine aus einem Federblech ausgeschnittene oder ausgestanzte Feder, eignet sich in besonderem Maße als Rückstellmittel, da eine derartige Blattfeder eine ausreichende Kraft zur Rückstellung der Griffschale bei gleichzeitig kompakter Bauform ermöglicht. Vorzugsweise weist die Blattfeder eine bogenförmige Form auf, so dass sich die Blattfeder an die Außenkontur des Staubsauger-Saugrohrs bzw. an die Innenkontur des Außenrohrs anschmiegt. Die Blattfeder ist beispielsweise auf den Führungsstutzen aufgesetzt und schmiegt sich an die Außenkontur des Führungsstutzens an. Ferner ist auch eine Befestigung der Blattfeder am Gehäuse vorgesehen.

Die Blattfeder ist dabei vorteilhaft derart angeordnet, dass sie bei einer Auslenkung der Griffschale senkrecht zu ihrer Bogenform beansprucht wird. Das heißt, dass die Blattfeder in der Normalenrichtung einer Ebene beansprucht wird, die durch den bogenförmigen Verlauf der Blattfeder aufgespannt wird. Vorzugsweise sind vor und hinter einem Stellvorsprung einer Griffschale jeweils eine Blattfeder als Rückstellmittel angeordnet, so dass bei jeder der möglichen Auslenkungsrichtungen der Griffschale - aus der Verriegelungsposition in eine der beiden Freigabepositionen - eine Rückstellkraft von einer der Blattfedern auf die Griffschale ausgeübt wird.

Insbesondere wird eine ausreichende Rückstellkraft auf das Klemmelement gemäß einer weiteren Ausgestaltung dadurch gewährleistet, dass die Klemmfeder als Blattfeder ausgebildet ist, insbesondere als doppellagige Blattfeder. Die Klemmfeder wird vorzugsweise in dem Gehäuse gehalten, in dem auch das Klemmelement und die Klemmkeile gehalten und geführt werden. Die Blattfeder stützt sich vorzugsweise an dem Gehäuse ab und wirkt mittelbar oder unmittelbar auf das Klemmelement. Vorzugsweise ist die Klemmfeder derart ausgebildet und angeordnet, dass sie im vollständig entspannten Zustand das Klemmelement in der Klemmposition hält. Sobald das Klemmelement aus der Klemmposition, folglich auch die Griffschale aus der Verriegelungsposition, ausgelenkt wird, wird auch die Klemmfeder belastet und gespannt, wodurch die Klemmfeder eine Federkraft hervorruft, die eine Rückführung des Klemmelements in die Klemmposition anstrebt. Dabei erfolgt gleichzeitig auch eine Rückstellung der Griffschale in die Verriegelungsposition.

Insbesondere eine vorteilhafte Kraftübertragung zwischen Klemmelement und Klemmkeilen wird gemäß einer weiteren Ausgestaltung dadurch gewährleistet, dass das Klemmelement als Klemmplatte ausgebildet ist, die zwei in einer gemeinsamen Ebene angeordnete Stellarme umfasst, und dass jeweils ein Stellarm formschlüssig in einen Klemmkeil eingreift, insbesondere dass die Stellarme parallel zur Längserstreckung des Staubsauger-Saugrohrs orientiert sind. Das Klemmelement, das als Klemmplatte ausgebildet ist, umfasst folglich zwei Stellarme, die gegenüberliegend und vorzugsweise in einer Ebene liegend zueinander angeordnet sind. Eine Bewegung der Klemmplatte im Montagezustand erfolgt vorteilhaft in Normalenrichtung der gemeinsamen Ebene der Stellarme.

Im Montagezustand greift jeder der Stellarme in einen Klemmkeil ein und stellt dadurch die formschlüssige Verbindung zwischen Klemmplatte und Klemmkeilen her, die erforderlich ist, um mit einer Bewegung der Klemmplatte beide Klemmkeile gleichzeitig zu bewegen. Die Stellarme sind vorzugsweise derart angeordnet, dass sie sich parallel zur Längserstreckung des Staubsauger-Saugrohrs erstrecken und auch in dieser Anordnung die Klemmkeile halten, die mit den am Innenrohr vorgesehenen Rastvertiefungen - die ebenfalls in Längsrichtung des Innenrohrs angeordnet sind - zusammenwirken.

Um auf einfache Weise mit der Griffschale zusammenzuwirken, ist gemäß einer weiteren Ausgestaltung des Staubsauger-Saugrohrs vorgesehen, dass das Klemmelement zwei orthogonal zur Längserstreckung des Staubsauger-Saugrohrs orientierte Hebearme aufweist, dass die Hebearme in korrespondierende, V-förmige Führungen in der Griffschale eingreifen, und dass eine Verschiebung der Griffschale aus der Verriegelungsposition dazu führt, dass die Hebearme an einer Flanke der V-förmigen Führungen hinaufgleiten, wodurch das Klemmelement entgegen der Federkraft der Klemmfeder bewegt wird.

Die Hebearme des Klemmelements sind im Montagezustand orthogonal zur Verschieberichtung der Griffschale angeordnet, wobei die Hebearme in zwei gegenüberliegend angeordnete V-förmige Führungen in der Griffschale eingreifen. In der Verriegelungsposition befinden sich die Hebearme in der Spitze der V-förmigen Führung. Bei einer Auslenkung der Griffschale aus der Verriegelungsposition gleiten die Hebearme - je nach Auslenkungsrichtung - eine der beiden Flanken der V-förmigen Führung hinauf, wodurch das Klemmelement in einer Richtung orthogonal zur Längserstreckung des Staubsauger-Saugrohrs bzw. entgegen der Federkraft der Klemmfeder bewegt wird. Das Klemmelement wird folglich von der Längsachse des Staubsauger-Saugrohrs weg bewegt. Durch die Bewegung des Klemmelements werden die Klemmkeile aus dem Eingriff mit den Rastvertiefungen am Innenrohr gehoben, wodurch anschließend eine Teleskopierbarkeit des Staubsauger-Saugrohrs gewährleistet ist.

Bei einer Ausgestaltung, bei der das Klemmelement und die Klemmkeile in einem gemeinsamen Gehäuse angeordnet sind, ist vorgesehen, dass sich die Hebearme seitlich aus dem Gehäuse erstrecken, so dass diese mit den V-förmigen Führungen in der Griffschale zusammenwirken können.

Gemäß einer weiteren vorteilhaften Ausgestaltung ist vorgesehen, dass der Betätigungsmechanismus einen Schwenkbügel umfasst, dass der Schwenkbügel mit der Griffschale und mit dem Klemmelement in Verbindung steht, so dass durch ein Verschieben der Griffschale aus der Verriegelungsposition der Schwenkbügels betätigt wird, wodurch Klemmelement weg von der Längsachse des Staubsauger-Saugrohrs bewegt wird. Der Schwenkbügel ist vorzugsweise mit dem Klemmelement verbunden. Insbesondere steht der Schwenkbügel mit einer Schenkkante in Kontakt, über die der Schwenkbügel schwenkbar ist. Der Schwenkbügel wird dazu am von dem Klemmelement abgewandten Ende betätigt, nämlich das abgewandte Ende in Richtung des Staubsauger-Saugrohrs bewegt, so dass der Schwenkbügel hebelartig über die Schwenkkante geschwenkt wird, wodurch sich das Klemmelement von der Längsachse des Staubsauger-Saugrohrs weg bewegt. Eine Betätigung des Schwenkbügels erfolgt insbesondere durch ein Verschieben der Griffschale aus der Verriegelungsposition in eine der Entriegelungspositionen. Der Schwenkbügel ist vorzugsweise aus einem Metall hergestellt. Beispielsweise weist der Schwenkbügel eine U-förmige Grundform auf. Vorteilhaft ist die geöffnete Seite der U-Form in Richtung des Klemmelements orientiert.

Eine Betätigung des Schwenkbügels lässt sich gemäß einer weiteren Ausgestaltung besonders vorteilhaft dadurch realisieren, wenn gemäß einer weiteren Ausgestaltung vorgesehen ist, dass an der Griffschale mindestens eine Anlaufschräge vorgesehen ist, und dass der Schwenkbügel bei einem Verschieben der Griffschale aus der Verriegelungsposition über die Anlaufschräge gleitet, wodurch der Schwenkbügel betätigt wird. Vorzugsweise weist die Griffschale zwei gegenüberliegen angeordnete Anlaufschrägen auf, die V-förmig angeordnet sind, so dass eine Betätigung des Schwenkbügels durch Verschieben der Griffschale in beide Entriegelungspositionen erfolgt. Die Anlaufschräge ist beispielsweise einstückig mit der Griffschale ausgebildet.

Die Bedienung des Staubsauger-Saugrohrs lässt sich gemäß einer weiteren Ausgestaltung dadurch vereinfachen, dass die Griffschale das Außenrohr vollumfänglich umschließt, insbesondere dass die Griffschale zweiteilig ausgebildet ist. Die Griffschale ist wahlweise derart ausgebildet, dass sie auf das Außenrohr aufschiebbar ist und so das Außenrohr voll umfänglich an einer Endseite umschließt. Alternativ dazu ist vorgesehen, dass die Griffschale zweiteilig ausgebildet ist, so dass das Außenrohr endseitig durch zwei zusammengefügte Halbschalen der Griffschale umschlossen wird. Für einen Benutzer, der den Betätigungsmechanismus zur Teleskopierung des Staubsauger-Saugrohrs entriegeln will, ist eine Betätigung der Griffschale - des Betätigungsmechanismus - ohne weiteres möglich, da diese einfach mit einer Hand umgriffen werden kann. Ferner lassen sich die weiteren Bauelemente des Betätigungsmechanismus in der Griffschale anordnen.

Die Aufgabe ist ferner bei einem gattungsgemäßen Staubsauger-Saugrohr dadurch gelöst, dass das Rückstellmittel als mindestens eine bogenförmige Blattfeder ausgebildet ist, die bei Auslenkung der Griffschale orthogonal zu ihrer Bogenform verformt wird und dadurch eine Rückstellkraft auf die Griffschale ausübt. Die Verwendung einer Bogenfeder hat den Vorteil, dass bei einer kompakten Bauform eine große Federkraft aufgebracht werden kann, die eine Blockade im Betätigungsmechanismus überwinden kann.

Im Einzelnen gibt es nun eine Vielzahl von Möglichkeiten das Staubsauger-Saugrohr auszugestalten und weiterzubilden. Dazu wird verwiesen sowohl auf die dem Patentanspruch 1 nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein Ausführungsbeispiel eines Staubsauger-Saugrohrs in perspektivischer Ansicht,
- Fig. 2: ein Ausführungsbeispiel eines Staubsauger-Saugrohrs in teilweise geschnittener Ansicht,
- Fig. 3: das Ausführungsbeispiel gemäß Fig. 2 teilweise montiert in teilweise geschnittener Ansicht,
- Fig. 4: das Ausführungsbeispiel gemäß Fig. 2 in geschnittener Seitenansicht,
- Fig. 5: ein Ausführungsbeispiel eines Teils einer Griffschale in geschnittener Ansicht,
- Fig. 6: ein Ausführungsbeispiel eines Rückstellmittels,
- Fig. 7: ein Ausführungsbeispiel eines Staubsauger-Saugrohrs teilweise montiert in perspektivischer Ansicht,
- Fig. 8: das Ausführungsbeispiel eines Staubsauger-Saugrohrs gemäß Fig. 7 mit der Griffschale einer Entriegelungsposition,
- Fig. 9: ein Ausführungsbeispiel eines Staubsauger-Saugrohrs in Seitenansicht,
- Fig. 10: das Ausführungsbeispiel eines Staubsauger-Saugrohrs gemäß Fig. 10 in geschnittener Seitenansicht,
- Fig. 11: ein Ausführungsbeispiel eines Staubsauger-Saugrohrs in Seitenansicht, und
- Fig. 12: das Ausführungsbeispiel eines Staubsauger-Saugrohrs gemäß Fig. 12 in geschnittener Seitenansicht.

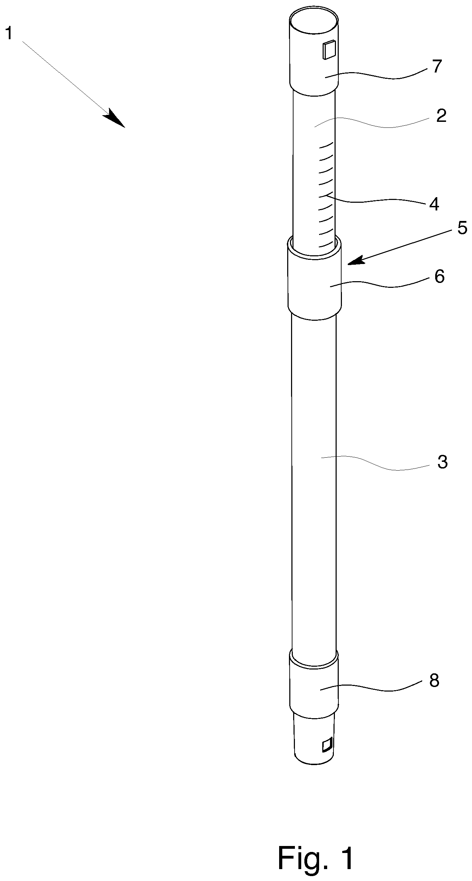

Fig. 1 zeigt ein Staubsauger-Saugrohr 1 mit einem Innenrohr 2 und einem Außenrohr 3. Das Innenrohr 2 weist eine Mehrzahl von Rastvertiefungen 4 auf, die mit einem am Außenrohr 3 angeordneten Betätigungsmechanismus 5 zusammenwirken. Der Betätigungsmechanismus 5 umfasst eine Griffschale 6, die von einem Benutzer gegriffen werden kann und in Achsrichtung des Staubsauger-Saugrohrs 1 verschiebbar gehalten ist, so dass die Griffschale 6 aus der in Fig. 1 dargestellten Verriegelungsposition in zwei Entriegelungspositionen verschiebbar ist. Die Griffschale 6 ist sowohl in Richtung der freiend Endseite des Innenrohrs 2 als auch in Richtung der freien Endseite des Außenrohrs 3 verschiebbar. An den beiden Endseiten des Staubsauger-Saugrohrs 1 ist am Innenrohr 2 ein erstes Anschlusselement 7 und am Außenrohr 3 ein zweites Anschlusselement 8 angeordnet. Das erste Anschlusselement 7 und das zweite Anschlusselement 8 dienen dem Anschluss des Staubsauger-Saugrohrs 1 einerseits an einen - nicht dargestellten - Saugschlauch und andererseits an eine - nicht dargestellte - Bodendüse.

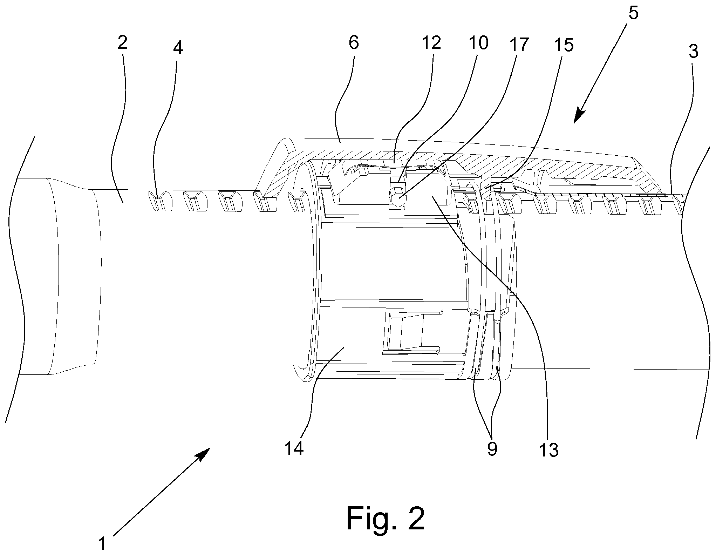

Fig. 2 zeigt ein teilweise geschnittenes und teilweise montiertes Ausführungsbeispiel eines Staubsauger-Saugrohrs 1 mit einem Innenrohr 2 und einem Außenrohr 3 in perspektivischer Ansicht. Das Innenrohr 2 weist eine Mehrzahl von Rastvertiefungen 4 auf, die mit dem Betätigungsmechanismus 5 zusammenwirken, der am Außenrohr 3 angeordnet und befestigt ist. Die Griffschale 6 ist teilweise montiert und geschnitten dargestellt, so dass der Innenaufbau des Betätigungsmechanismus 5 erkennbar ist. Auch das Außenrohr 3 ist in derselben Schnittebene geschnitten, wobei der untere Teil in dieser Darstellung nicht sichtbar ist. Die Griffschale 6 ist insgesamt zweiteilig ausgebildet, wobei nur die geschnittene obere Hälfte dargestellt ist. Der Betätigungsmechanismus 5 umfasst innerhalb der Griffschale 6 ein Rückstellmittel 9, dass bei diesem Ausführungsbeispiel als zwei teilweise offene Ringe aus einem Federstahl ausgebildet ist. Ferner umfasst der Betätigungsmechanismus 5 ein Klemmelement 10.

Die Griffschale 6 des Betätigungsmechanismus 5 befindet sich in der Verriegelungsposition und ist in Längsrichtung des Staubsauger-Saugrohrs 1 in beide Richtungen, also in Richtung beider Endseiten des Staubsauger-Saugrohrs 1 - verschiebbar gehalten. Das Rückstellmittel 9 wirkt derart auf die Griffschale 6, dass diese bei einer Auslenkung in eine Entriegelungsposition stets in die Verriegelungsposition zurückgestellt wird, nämlich eine Rückstellkraft zur Rückstellung der Griffschale 6 in die Verriegelungsposition ausübt.

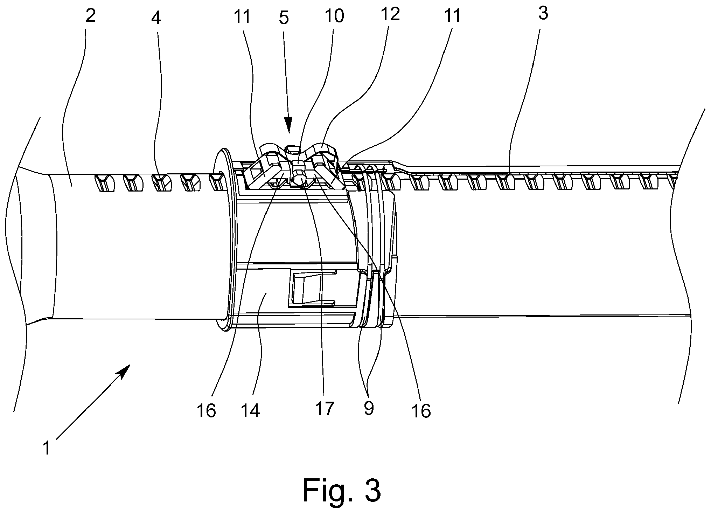

Fig. 3 zeigt das Ausführungsbeispiel eines Staubsauger-Saugrohrs 1 gemäß Fig. 2, das teilweise geschnitten und teilweise montiert ist. Der dargestellte Teil des Betätigungsmechanismus 5 umfasst das Rückstellmittel 9, das Klemmelement 10 und zwei Klemmkeile 11. Gemäß Fig. 3 umfasst der Betätigungsmechanismus 5 zusätzlich eine Klemmfeder 12, die bei diesem Ausführungsbeispiel als Blattfeder ausgebildet ist. Die Klemmfeder 12 ist im dargestellten Verriegelungszustand entspannt, wirkt aber dennoch derart auf das Klemmelement 10, dass die Klemmkeile 11 im Eingriff mit den Rastvertiefungen 4 am Innenrohr 2 gehalten werden. Erst wenn das Klemmelement 10 durch ein Verschieben der Griffschale 6 orthogonal von der Längsachse des Staubsauger-Saugrohrs 1 weg bewegt wird, übt die Klemmfeder 12 eine Federkraft auf das Klemmelement 10 aus, wodurch eine Rückstellung des Klemmelements 10 in die Klemmposition angestrebt wird.

Das Klemmelement 10 ist formschlüssig mit den Klemmkeilen 11 verbunden, so dass beide Klemmkeile 11 gleichzeitig durch eine Bewegung des Klemmelements 10 bewegbar sind, nämlich sowohl auf das Staubsauger-Saugrohrs 1 zu als auch von diesem weg. In der Klemmposition des Klemmelements 10 werden die beiden Klemmkeile 11 in formschlüssigem Eingriff mit den Rastvertiefungen 4 am Innenrohr 2 gehalten, so dass eine Bewegung des Innenrohrs 2 relativ zum Außenrohr 3 blockiert ist.

Gemäß Fig. 2 sind die Klemmkeile 11 und das Klemmelement 10 in einem Gehäuse 13 gehalten und geführt, wobei das Gehäuse 13 zwischen Griffschale 6 und Außenrohr 3 angeordnet ist. Das Außenrohr 3 ist an der in Fig. 2 und 3 dargestellten Endseite erweitert, wobei in die Erweiterung des Außenrohrs 3 ein Führungsstutzen 14 eingeschoben und formschlüssig mit dem Außenrohr 3 verrastet ist. Das Gehäuse 13 ist über eine Ausnehmung im Außenrohr 3 mit dem Führungsstutzen 14 verbunden. Das Gehäuse 13 weist innenseitig zwei zueinander geneigte schiefe Ebenen auf, an denen die Klemmkeile 11 bei einer Bewegung des Klemmelements 10 entlang gleiten. Die Neigung der schiefen Ebenen in dem Gehäuse 13 korrespondiert zur Neigung der Klemmkeile 11 gemäß Fig. 3.

Gemäß Fig. 2 ist an der Griffschale 6 ein Stellvorsprung 15 vorgesehen, der das Außenrohr 3 in einer separaten Ausnehmung durchgreift und mit dem im Außenrohr 3 angeordneten Rückstellmittel 9 zusammenwirkt. Der Stellvorsprung 15 ist zwischen den beiden Ringfedern, die das Rückstellmittel 9 bilden, derart angeordnet, dass bei einer Auslenkung aus der Verriegelungsposition stets eine Rückstellung der Griffschale 6 angestrebt wird.

Gemäß Fig. 3 sind an dem Klemmelement 10 zwei in einer gemeinsamen Ebene angeordnete Stellarme 16 vorgesehen, die formschlüssig in jeweils einen Klemmkeil 11 eingreifen, um diesen zu bewegen. Die Stellarme 16 sind gemäß Fig. 3 parallel zur Längserstreckung des Staubsauger-Saugrohrs 1 - zur Längsachse - orientiert. Orthogonal zu den Stellarmen 16 sind zwei Hebearme 17 gegenüberliegend am Klemmelement 10 angeordnet, die dazu dienen, dass das Klemmelement 10 mit der Griffschale 6 zusammenwirken kann.

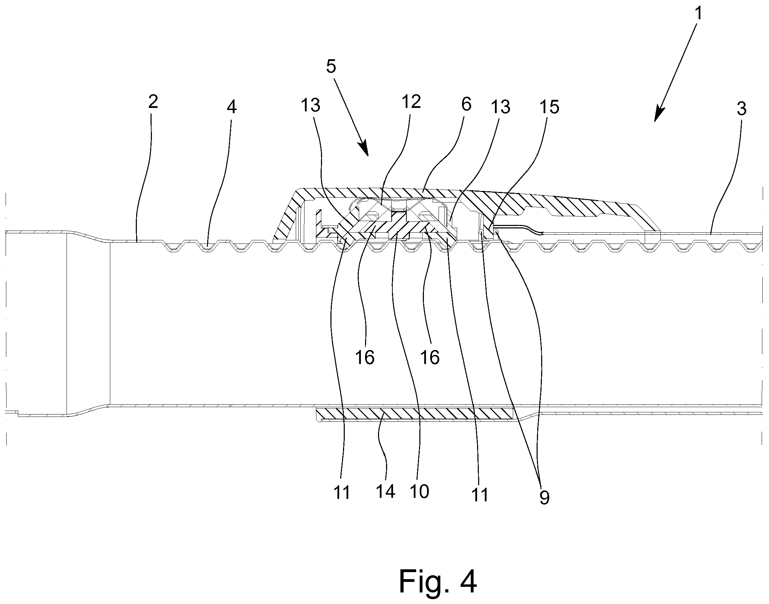

Fig. 4 zeigt eine geschnittene Seitenansicht des Ausführungsbeispiels eines Staubsauger-Saugrohrs 1 gemäß Fig. 2 mit dem Außenrohr 3 und dem Innenrohr 2. Das Innenrohr 2 weist Rastvertiefungen 4 auf, die mit den Klemmkeilen 11 des Betätigungsmechanismus 5 zusammenwirken, indem die Klemmkeile 11 in der Verriegelungsposition der Griffschale 6 - dargestellt - formschlüssig in die Rastvertiefungen 4 eingreifen. Zwischen der Griffschale 6 und dem Außenrohr 3 ist das Gehäuse 13 angeordnet, wobei in dem Gehäuse 13 die Klemmkeile 11 und das Klemmelement 10 angeordnet sind. Die Klemmkeile 11 gleiten an einer schiefen Ebene am Gehäuse 13.

Das Außenrohr 3 weist eine separate Ausnehmung für den Stellvorsprung 15 und eine weitere Ausnehmung für das Gehäuse 13 auf. Das Gehäuse 13 ist von innen nach außen durch die Ausnehmung in dem Außenrohr 3 durchgesteckt. Die Klemmfeder 12 ist doppellagig und am Gehäuse 13 gehalten. Die Klemmfeder 12 ist im entspannten Zustand und hält das Klemmelement 10 in der Klemmposition, so dass auch die Klemmkeile 11 im Eingriff mit den Rastvertiefungen 4 des Innenrohrs 2 gehalten werden. Bei einer Auslenkung der Griffschale 6 aus der dargestellten Verriegelungsposition wird das Klemmelement 10 angehoben, nämlich von der Längsachse des Staubsauger-Saugrohrs 1 weg bewegt, so dass auch die Klemmkeile 11 aus dem Eingriff mit den Rastvertiefungen 4 des Innenrohrs 2 gehoben werden, wodurch eine Bewegung des Innenrohrs 2 relativ zum Außenrohr 3 freigegeben wird. Bei jeder Auslenkung der Griffschale 6 aus der Verriegelungsposition strebt das Rückstellmittel 9 eine Rückstellung in die Verriegelungsposition an. In Längsrichtung des Staubsauger-Saugrohrs 1 ist vor und hinter dem Stellvorsprung 15 jeweils ein Ring aus Federstahl des Rückstellmittels 8 angeordnet; das Rückstellmittel 9 ist hier durch diese Ringe gebildet.

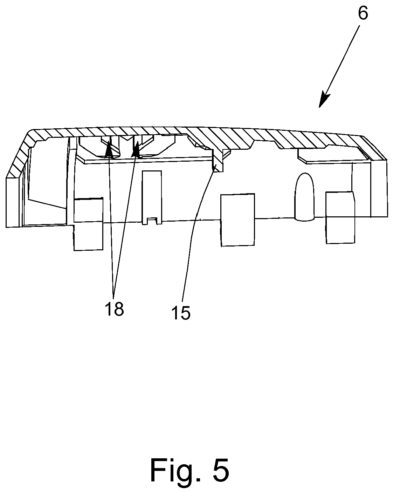

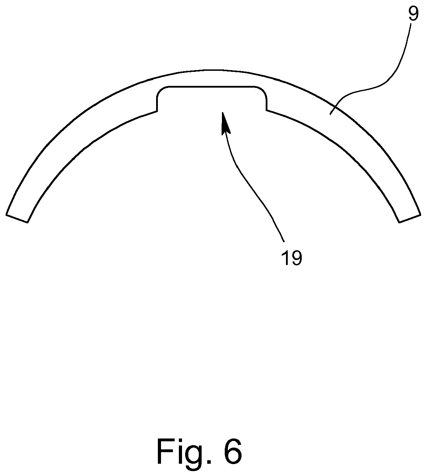

Fig. 5 zeigt einen Teil einer Griffschale 6 in geschnittener Seitenansicht. Die Griffschale 6 besteht aus zwei Teilen, wobei gemäß Fig. 6 ein Oberteil dargestellt ist. In der Griffschale 6 ist eine V-förmige Führung 18 vorgesehen, in die die Hebearme 17 des Klemmelements 10 eingreifen und mit diesen zusammenwirken. Im Montagezustand führt die V-förmige Führung 18 dazu, dass die Hebearme 17 an den Flanken der V-förmigen Führung 18 hinaufgleiten, wodurch das Klemmelement 10 von dem Staubsauger-Saugrohr 1 wegbewegt wird. Der Stellvorsprung 15 ist einstückig mit der Griffschale 6 ausgebildet.

Fig. 6 zeigt ein Ausführungsbeispiel eines Rückstellmittels 9, das als Bogenfeder ausgebildet ist. Das Rückstellmittel 9 - die Bogenfeder - ist aus einem Federblech herausgeschnitten und weist eine derartige Bogenform auf, dass sich das Rückstellmittel 9 an die Außenkontur eines Führungsstutzens 14 und damit an die Außenkontur eines Innenrohrs 2 anschmiegen kann. Im zentralen Mittelbereich weist das Rückstellmittel 9 eine Ausnehmung 19 auf, mit der das Rückstellmittel 9 formschlüssig beispielsweise mit einem Gehäuse 13 verrastbar ist.

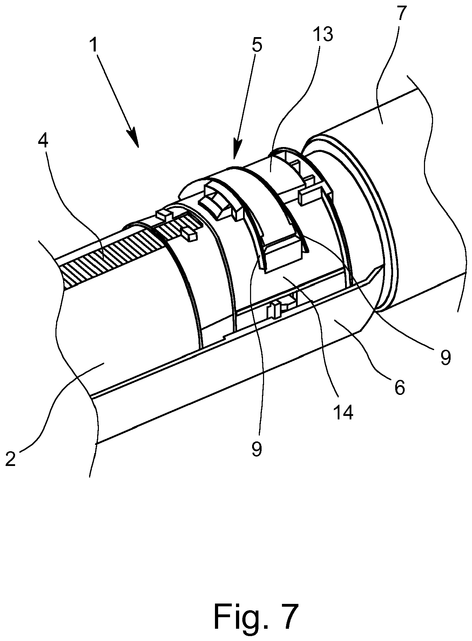

Fig. 7 zeigt ein Ausführungsbeispiel eines Staubsauger-Saugrohrs 1. Dargestellt ist das Innenrohr 2 und der Betätigungsmechanismus 5 sowie ein unterer Teil einer Griffschale 6. Im Endbereich des Innenrohrs ist ein ersten Anschlusselement 7 angeordnet, dass beispielsweise zum Anschluss eines - nicht dargestellten - Saugschlauchs dient. Das Außenrohr 3 ist nicht dargestellt. Die Griffschale 6 ist zweiteilig ausgebildet und am - nicht dargestellten - Außenrohr 3 befestigt. Endseitig ist im - nicht dargestellten - Außenrohr 3 ein Führungsstutzen 14 vorgesehen. Das Innenrohr 2 ist durch den Führungsstutzen 14 in das Außenrohr 3 eingeführt. Das Innenrohr 2 umfasst Rastvertiefungen 4, die mit dem Betätigungsmechanismus 5 zusammenwirken. Formschlüssig an dem Führungsstutzen 14 ist ein Rückstellmittel 9 befestigt, das als zwei bogenförmige Blattfedern ausgebildet ist. Dargestellt ist die Verriegelungsposition der Griffschale 6, in der das Rückstellmittel 9 nicht ausgelenkt ist. Die Blattfedern des Rückstellmittels 9 entsprechen dem in Fig. 6 dargestellten Ausführungsbeispiel.

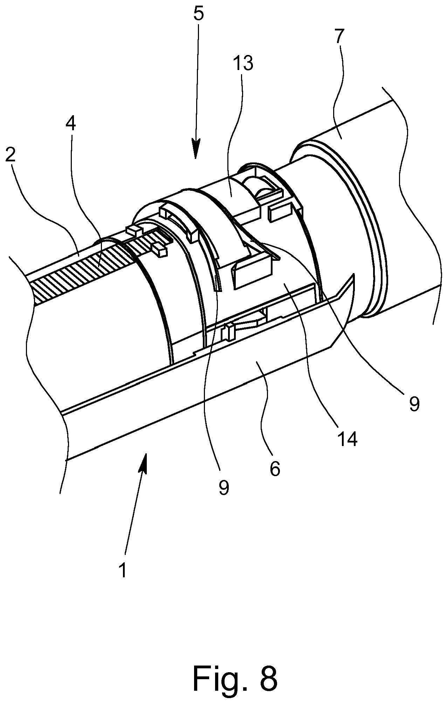

Fig. 8 zeigt das Ausführungsbeispiel gemäß Fig. 7, wobei die Griffschale 6 in eine Entriegelungsposition - in Richtung der freien Endseite des - nicht dargestellten - Außenrohrs 3 verschoben ist, wodurch eine Bewegung des Innenrohrs 2 freigegeben ist, da die Rastvertiefungen 4 nicht mehr formschlüssig blockiert sind. Durch Verschieben der Griffschale 6 in die Entriegelungsposition wird eine der Bogenfedern des Rückstellmittels 9 orthogonal zu ihrer Bogenform belastet und verformt, wodurch diese Bogenfeder des Rückstellmittels 9 eine Rückstellkraft auf die Griffschale 6 ausübt, um diese in die Verriegelungsposition zurückzustellen. Das Rückstellmittel 9 ist dazu relativ - zusammen mit der Griffschale 6 - zum Führungsstutzen 14 bewegt worden.

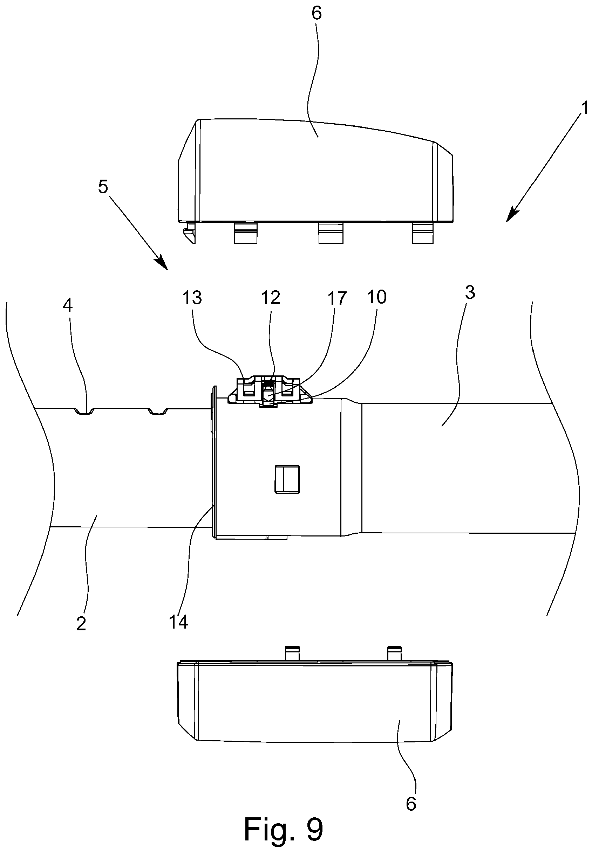

Fig. 9 zeigt ein Ausführungsbeispiel eines Staubsauger-Saugrohrs 1 mit einem Innenrohr 2 und einem Außenrohr 3. Das Innenrohr 2 weist Rastvertiefungen 4 auf. Das Außenrohr 3 ist endseitig erweitert, so dass ein Führungsstutzen 14 in die endseitige Erweiterung eingeschoben und mit dem Außenrohr 3 formschlüssig verrastet ist. An dem Führungsstutzen 14 ist ein Rückstellmittel 9 angeordnet, das bei einer Auslenkung der Griffschale 6 aus der dargestellten Verriegelungsposition stets eine Rückstellung der Griffschale 6 anstrebt. Das Klemmelement 10 ist zusammen mit der Klemmfeder 12, die bei diesem Ausführungsbeispiel als Spiralfeder ausgebildet ist, innerhalb eines Gehäuses 13 gehalten. Das Klemmelement 10 weist orthogonal zur Längserstreckung des Staubsauger-Saugrohrs 1 orientierte Hebearme 17 auf, die mit V-förmigen Führungen in der Griffschale 6 - siehe auch Fig. 5 - zusammenwirken.

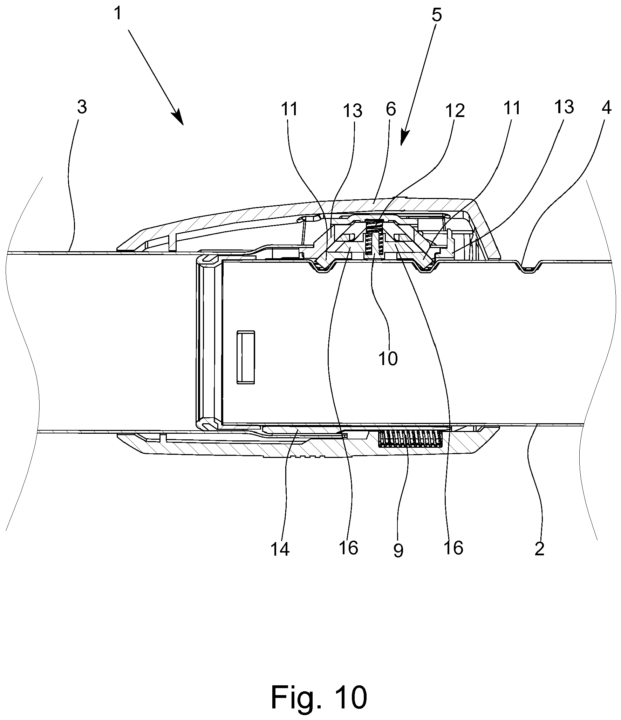

Fig. 10 zeigt das Ausführungsbeispiel eines Staubsauger-Saugrohrs 1 gemäß Fig. 9 in geschnittener Seitenansicht. Das Rückstellmittel ist bei diesem Ausführungsbeispiel als Spiralfeder ausgebildet, die parallel zur Längserstreckung des Staubsauger-Saugrohrs 1 angeordnet ist. Das Rückstellmittel 9 ist in der Griffschale 6 angeordnet. Das Innenrohr 2 weist wiederum Rastvertiefungen 4 auf, die mit den Klemmkeilen 11 des Betätigungsmechanismus 5 zusammenwirken. Das Außenrohr 3 ist endseitig erweitert, wobei in die Erweiterung ein Führungsstutzen 14 eingeschoben worden ist.
Die Griffschale 6 umschließt die weiteren Bauelemente des Betätigungsmechanismus 5, insbesondere nämlich das Gehäuse 13, das wiederum das Klemmelement 10, die Klemmkeile 11 und die Klemmfeder 12, die als Spiralfeder ausgebildet ist, umschließt. Die Klemmfeder 12 übt eine orthogonal auf die Längsachse des Staubsauger-Saugrohrs 1 ausgerichtete Kraft auf das Klemmelement 10 aus. Das Klemmelement 10 verfügt über Stellarme 16, die formschlüssig in Öffnungen der Klemmkeile 11 eingreifen, so dass beide Klemmkeile 11 gleichzeitig mit einer Bewegung des Klemmelements 10 von der Längsachse des Staubsauger-Saugrohrs 1 wegbewegt werden.

Entgegen der Bewegung des Klemmelements 10 von der Längsachse des Staubsauger-Saugrohrs 1 weg wirkt die Klemmfeder 12, die sich am Gehäuse 13 abstützt und bei Bewegung des Klemmelements 10 stets eine Rückstellung des Klemmelements 10 in die Klemmposition anstrebt. Das Klemmelement 10 wird wiederum durch eine Bewegung der Griffschale 6 in eine Richtung parallel zur Längserstreckung des Staubsauger-Saugrohrs 1 von dem Staubsauger-Saugrohr 1 wegbewegt. Das Klemmelement 10 und die Griffschale 6 wirken über - in dieser Figur nicht dargestellte - Hebearme 17 und V-förmige Führungen 18 zusammen.

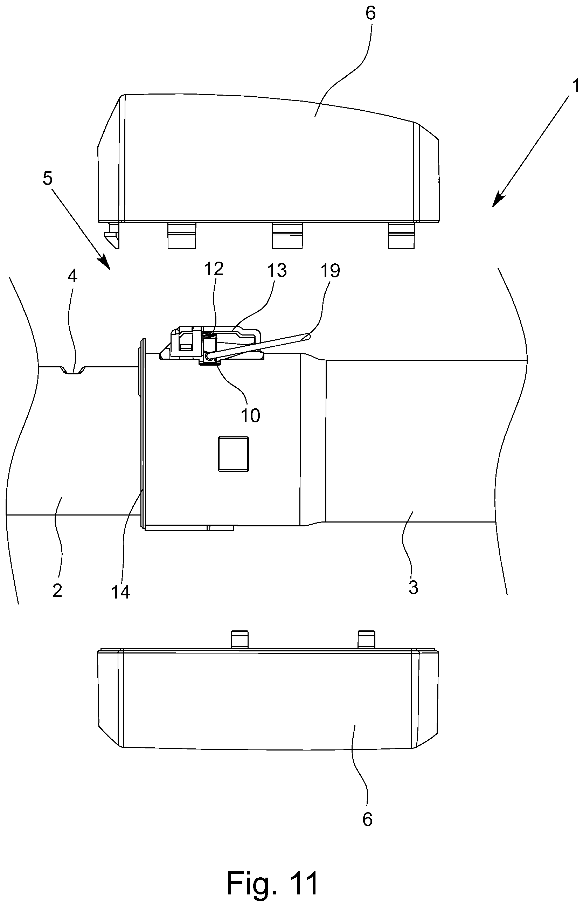

Fig. 11 zeigt ein Ausführungsbeispiel eines Staubsauger-Saugrohrs 1 in teilweise montierter Seitenansicht. Das Außenrohr 3 ist endseitig erweitert, wobei die endseitige Erweiterung ein Führungsstutzen 14 eingeschoben und mit dem Außenrohr 3 verrastet ist. Das Innenrohr 2 ist in das Außenrohr 3 eingeschoben und weist Rastvertiefungen 4 auf. Die Griffschale 6 ist bei diesem Ausführungsbeispiel zweiteilig ausgebildet und nicht montiert. Der Betätigungsmechanismus 5 umfasst zusätzlich zur Klemmfeder 12, die sich am Klemmelement 10 und dem Gehäuse 13 abstützt, einen Schwenkbügel 19, der am Klemmelement 10 befestigt ist und der sich wiederum auf etwa Hälfte seiner seitlichen Länge am Gehäuse 13 an einer Schwenkkante abstützt.

Durch eine Bewegung der freien Endseite des Schwenkbügels 19 in Richtung des Staubsauger-Saugrohrs erfolgt durch die Hebelwirkung eine Bewegung des Klemmelements 10 von der Längsachse des Staubsauger-Saugrohrs 1 weg, wobei eine Hebelwirkung über die Schwenkkante erfolgt. Die Klemmfeder 12 wirkt einer derartigen Bewegung entgegen und strebt bei einer Auslenkung des Schwenkbügels stets eine Rückstellung in die dargestellte Position, insbesondere nämlich die Klemmposition des Klemmelements 10 an. Eine Bewegung der freien Endseite des Schwenkbügels 19 in Richtung des Staubsauger-Saugrohrs 1 erfolgt durch eine Verschiebung der Griffschale 6 aus der Verriegelungsposition in eine Entriegelungsposition, nämlich durch Einwirkung der Griffschale 6 auf den Schwenkbügel 19.

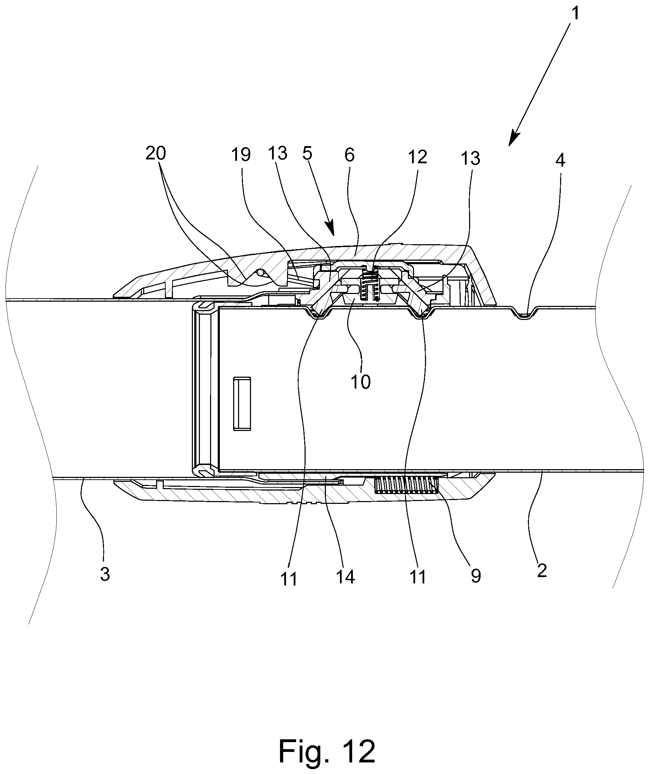

Fig. 12 zeigt das Ausführungsbeispiel gemäß Fig. 11 in einer geschnittenen Seitenansicht. Das Außenrohr ist endseitig erweitert, wobei die endseitige Erweiterung in einen Führungsstutzen 14 eingeschoben ist. Das Rückstellmittel 9 ist in der Griffschale 6 angeordnet und wirkt einer Verschiebung der Griffschale 6 aus der Verriegelungsposition in eine Entriegelungsposition entgegen. Der Schwenkbügel 19 wirkt mit zwei Anlaufschrägen 20 an der Griffschale 6 zusammen, an denen der Schwenkbügel 19 bei einer Bewegung der Griffschale 6 aus der Verriegelungsposition in eine Entriegelungsposition derart entlanggleitet, so dass die freie Endseite des Schwenkbügels 19 in Richtung des Staubsauger-Saugrohrs 1 bewegt wird, wodurch das Klemmelement 10 von dem Staubsauger-Saugrohr 1, insbesondere von dessen Längsachse, wegbewegt wird. In Abhängigkeit von der Verschieberichtung der Griffschale 6 gleitet der Schwenkbügel 19 an einer der beiden Anlaufschrägen 20 der Griffschale 6 entlang.

Die Klemmfeder 12, die sich am Klemmelement 10 und am Gehäuse 13 abstützt, wirkt einer derartigen Bewegung des Klemmelements 10 vom Staubsauger-Saugrohr 1 weg entgegen, so dass diese stets eine Rückstellung des Klemmelements 10 und damit eine Verrastung der Klemmkeile 11 mit den Rastvertiefungen 4 anstrebt. Das Klemmelement 10 ist derart mit den Klemmkeilen 11 verbunden, so dass die Klemmkeile 11 mit Vorsprüngen in korrespondierende Ausnehmungen am Klemmelement 10 eingreifen, wodurch das Klemmelement 10 formschlüssig mit den Klemmkeilen 11 verbunden ist und die Klemmkeile 11 gleichzeitig mit dem Klemmelement 10 von dem Staubsauger-Saugrohr 1 weg oder auf dieses zubewegt werden können. Die Klemmkeile 11 gleiten dabei an einer schiefen Ebene am Gehäuse 13 entlang.

## Patentansprüche

1. Staubsauger-Saugrohr (1) mit mindestens einem Innenrohr (2) und mindestens einem Außenrohr (3), wobei das Innenrohr (2) eine Mehrzahl von Rastvertiefungen (4) aufweist, wobei am Außenrohr (3) ein Betätigungsmechanismus (5) angeordnet ist, wobei der Betätigungsmechanismus (5) mindestens eine Griffschale (6), ein Rückstellmittel (9), ein Klemmelement (10) und zwei Klemmkeile (11) umfasst, wobei die Griffschale (6) in Längsrichtung des Staubsauger-Saugrohrs (1) verschiebbar gehalten ist, so dass die Griffschale (6) aus einer Verriegelungsposition in mindestens eine Entriegelungsposition bewegbar ist, wobei das Klemmelement (10) in der Verriegelungsposition der Griffschale (6) die Klemmkeile (11) im Eingriff mit den Rastvertiefungen (4) am Innenrohr (2) hält, wobei in der Entriegelungsposition eine Verschiebung des Innenrohrs (2) relativ zum Außenrohr (3) durch die Klemmkeile (11) freigegeben ist, und wobei das Rückstellmittel (9) bei einer Auslenkung der Griffschale (6) aus der Verriegelungsposition eine Rückstellkraft zur Rückstellung der Griffschale (6) in die Verriegelungsposition ausübt,
**dadurch gekennzeichnet,**
**dass** das Klemmelement (10) formschlüssig mit den Klemmkeilen (11) verbunden ist, so dass beide Klemmkeile (11) gleichzeitig durch eine Bewegung des Klemmelements (10) bewegbar sind, und dass das Klemmelement (10) mit der Griffschale (6) in Verbindung steht, so dass durch ein Verschieben der Griffschale (6) aus der Verriegelungsposition das Klemmelement (10) von der Längsachse des Staubsauger-Saugrohrs (1) weg bewegt wird, und dass durch eine Bewegung des Klemmelements (10) von der Längsachse des Staubsauger-Saugrohrs (1) weg die beiden Klemmkeile (11) gleichzeitig aus dem Eingriff mit den Rastvertiefungen (4) gehoben werden, wodurch eine Verschiebbarkeit des Innenrohrs (2) relativ zum Außenrohr (3) freigegeben wird.

2. Staubsauger-Saugrohr (1) nach Anspruch 1, **dadurch gekennzeichnet, dass** der Betätigungsmechanismus (5) zusätzlich eine Klemmfeder (12) umfasst, und dass eine Bewegung des Klemmelements (10) von der Längsachse des Staubsauger-Saugrohrs (1) weg entgegen der Kraft der Klemmfeder (12) erfolgt.

3. Staubsauger-Saugrohr (1) nach Anspruch 1 oder 2, **dadurch gekennzeichnet, dass** zwischen Griffschale (6) und Außenrohr (3) ein Gehäuse (13) vorgesehen ist, und dass das Klemmelement (10) und die beiden Klemmkeile (11) in dem Gehäuse (13) gehalten und geführt werden.

4. Staubsauger-Saugrohr (1) nach einem der Ansprüche 1 bis 3, **dadurch gekennzeichnet, dass** der Betätigungsmechanismus (5) einen Führungsstutzen (14) umfasst, und dass der Führungsstutzen (14) endseitig in das Außenrohr (3) eingeführt ist, insbesondere formschlüssig mit dem Außenrohr (3) verrastet ist.

5. Staubsauger-Saugrohr (3) nach Anspruch 4, **dadurch gekennzeichnet, dass** das Rückstellmittel (9) an dem Führungsstutzen (14) befestigt ist, insbesondere zumindest teilweise formschlüssig an dem Führungsstutzen (14) befestigt ist.

6. Staubsauger-Saugrohr (1) nach einem der Ansprüche 1 bis 5, **dadurch gekennzeichnet, dass** an der Griffschale (6) ein Stellvorsprung (15) vorgesehen ist, dass der Stellvorsprung (15) das Außenrohr (3) in einer Ausnehmung durchgreift, und dass der Stellvorsprung (15) mit dem im Außenrohr (3) angeordneten Rückstellmittel (9) zusammenwirkt.

7. Staubsauger-Saugrohr (1) nach einem der Ansprüche 1 bis 6, **dadurch gekennzeichnet, dass** das Rückstellmittel (9) als mindestens eine Blattfeder ausgebildet ist, insbesondere als mindestens eine bogenförmige Blattfeder, die senkrecht zu ihrer Bogenform beansprucht wird.

8. Staubsauger-Saugrohr (1) nach einem der Ansprüche 2 bis 7, **dadurch gekennzeichnet, dass** die Klemmfeder (12) als Blattfeder ausgebildet ist, insbesondere als doppellagige Blattfeder.

9. Staubsauger-Saugrohr (1) nach einem der Ansprüche 1 bis 8, **dadurch gekennzeichnet, dass** das Klemmelement (10) als Klemmplatte ausgebildet ist, die zwei in einer gemeinsamen Ebene angeordnete Stellarme (16) umfasst, und dass jeweils ein Stellarm (16) formschlüssig in einen Klemmkeil (11) eingreift, insbesondere, dass die Stellarme (16) parallel zur Längserstreckung des Staubsauger-Saugrohrs (1) orientiert sind.

10. Staubsauger-Saugrohr (1) nach einem der Ansprüche 2 bis 9, **dadurch gekennzeichnet, dass** das Klemmelement (10) zwei orthogonal zur Längserstreckung des Staubsauger-Saugrohrs (1) orientierte Hebearme (17) aufweist, dass die Hebearme (17) in korrespondierende, V-förmige Führungen (18) in der Griffschale (6) eingreifen, und dass eine Verschiebung der Griffschale (6) aus der Verriegelungsposition dazu führt, dass die Hebearme (17) an einer Flanke der V-förmigen Führung (18) hinaufgleiten, wodurch das Klemmelement (10) von der Längsachse des Staubsauger-Saugrohrs (1) weg bewegt wird.

11. Staubsauger-Saugrohr (1) nach Anspruch 3 und 10, **dadurch gekennzeichnet, dass** sich die Hebearme (17) seitlich aus dem Gehäuse (13) erstrecken.

12. Staubsauger-Saugrohr (1) nach einem der Ansprüche 1 bis 9, **dadurch gekennzeichnet, dass** der Betätigungsmechanismus (5) einen Schwenkbügel (19) umfasst, dass der Schwenkbügel (19) mit der Griffschale (6) und mit dem Klemmelement (10) in Verbindung steht, so dass durch ein Verschieben der Griffschale (6) aus der Verriegelungsposition der Schwenkbügels (19) betätigt wird, wodurch das Klemmelement (10) weg von der Längsachse des Staubsauger-Saugrohrs (1) bewegt wird.

13. Staubsauger-Saugrohr (1) nach Anspruch 12, **dadurch gekennzeichnet, dass** an der Griffschale (6) mindestens eine Anlaufschräge (20) vorgesehen ist, und dass der Schwenkbügel (19) bei einem Verschieben der Griffschale (6) aus der Verriegelungsposition über die Anlaufschräge (20) gleitet, wodurch der Schwenkbügel (19) betätigt wird.

14. Staubsauger-Saugrohr (1) nach einem der Ansprüche 1 bis 13, **dadurch gekennzeichnet, dass** die Griffschale (6) das Außenrohr (3) vollumfänglich umschließt, insbesondere, dass die Griffschale (6) zweiteilig ausgebildet ist.

15. Staubsauger-Saugrohr (1) mit mindestens einem Innenrohr (2) und mindestens einem Außenrohr (3), wobei das Innenrohr (2) eine Mehrzahl von Rastvertiefungen (4) aufweist, wobei am Außenrohr (3) ein Betätigungsmechanismus (5) angeordnet ist, wobei der Betätigungsmechanismus (5) mindestens eine Griffschale (6), ein Rückstellmittel (9), ein Klemmelement (10) und zwei Klemmkeile (11) umfasst, wobei die Griffschale (6) in Längsrichtung des Staubsauger-Saugrohrs (1) verschiebbar gehalten ist, so dass die Griffschale (6) aus einer Verriegelungsposition in mindestens eine Entriegelungsposition bewegbar ist, wobei das Klemmelement (10) in der Verriegelungsposition der Griffschale (6) die Klemmkeile (11) im Eingriff mit den Rastvertiefungen (4) am Innenrohr (2) hält, wobei in der Entriegelungsposition eine Verschiebung des Innenrohrs (2) relativ zum Außenrohr (3) durch die Klemmkeile (11) freigegeben ist, und wobei das Rückstellmittel (9) bei einer Auslenkung der Griffschale (6) aus der Verriegelungsposition eine Rückstellkraft zur Rückstellung der Griffschale (6) in die Verriegelungsposition ausübt, **dadurch gekennzeichnet, dass** das Rückstellmittel (9) als mindestens eine bogenförmige Blattfeder (9) ausgebildet ist, die bei Auslenkung der Griffschale (6) orthogonal zu ihrer Bogenform verformt wird und dadurch eine Rückstelkraft auf die Griffschale (6) ausübt.

## Claims

1. Vacuum cleaner suction tube (1) having at least one inner tube (2) and at least one outer tube (3), wherein the inner tube (2) has a plurality of retaining recesses (4), wherein an actuating mechanism (5) is arranged on the outer tube (3), wherein the actuating mechanism (5) includes at least one grip structure (6), one re-setting means (9), a clamping element (10) and two clamping wedges (11), wherein the grip structure (6) is slidably held in the longitudinal direction of the vacuum cleaner suction tube (1), so that the grip structure (6) is movable from one locked position into at least one unlocked position, wherein, in the locked position of the grip structure (6), the clamping element (10) keeps the clamping wedges (11) engaged with the retaining recesses (4) on the inner tube (2), wherein in the unlocked position, a sliding of the inner tube (2) relative to the outer tube (3) is enabled by the clamping wedges (11), and wherein, when the grip structure (6) is displaced out of the locked position, the re-setting means (9) exerts a re-setting force for re-setting the grip structure (6) into the locked position,
**characterized in**
**that** the clamping element (10) has a form-fit connection with the clamping wedges (11), so that both clamping wedges (11) can be simultaneously moved with one movement of the clamping element (10), and that the clamping element (10) is connected to the grip structure (6) so that the clamping element (10) is moved away from the longitudinal axis of the vacuum cleaner suction tube (1) by sliding the grip structure (6) out of the locking position, and that both clamping wedges (11) are simultaneously lifted out of engagement with the retaining recesses (4) by moving the clamping element (10) away from the longitudinal axis of the vacuum cleaner suction tube (1), whereby sliding of the inner tube (2) is enabled relative to the outer tube (3).

2. Vacuum cleaner suction tube (1) according to claim 1, **characterized in that** the actuating mechanism (5) additionally includes a clamp spring (12), and that moving the clamping element (10) away from the longitudinal axis of the vacuum cleaner suction tube (1) occurs against the force of the clamp spring (12).

3. Vacuum cleaner suction tube (1) according to claim 1 or 2, **characterized in that** a housing (13) is provided between the grip structure (6) and the outer tube (3), and that the clamping element (10) and both clamping wedges (11) are kept and guided in the housing (13).

4. Vacuum cleaner suction tube (1) according to any one of claims 1 to 3, **characterized in that** the actuating mechanism (5) includes a guiding nozzle (14) and that the guiding nozzle (14) is inserted in the end of the outer tube (3), in particular locked form-fit with the outer tube (3).

5. Vacuum cleaner suction tube (1) according to claim 4, **characterized in that** the re-setting means (9) is attached to the guiding nozzle (14), in particular, at least partially attached form-fit on the guiding nozzle (14).

6. Vacuum cleaner suction tube (1) according to any one of claims 1 to 5, **characterized in that** a setting lug (15) is provided on the grip structure (6), that the setting lug (15) passes the outer tube (3) through a recess and that the setting lug (15) interacts with the re-setting means (9) arranged in the outer tube (3).

7. Vacuum cleaner suction tube (1) according to any one of claims 1 to 6, **characterized in that** the re-setting means (9) is designed as at least one leaf spring, in particular, as at least one arched leaf spring that is strained perpendicular to its arched form.

8. Vacuum cleaner suction tube (1) according to any one of claims 2 to 7, **characterized in that** the clamp spring (12) is designed as a leaf spring, in particular as a double-layer leaf spring.

9. Vacuum cleaner suction tube (1) according to any one of claims 1 to 8, **characterized in that** the clamping element (10) is designed as a clamping plate, which includes two setting arms (16) arranged in a common plane, and that one setting arm (16) is engaged form-fit with each clamping wedge (11), in particular, that the setting arms (16) are oriented parallel to the longitudinal direction of the vacuum cleaner suction tube (1).

10. Vacuum cleaner suction tube (1) according to any one of claims 2 to 9, **characterized in that** the clamping element (10) has two lifting arms (17) oriented orthogonal to the longitudinal direction of the vacuum cleaner suction tube (1), that the lifting arms (17) engage in corresponding, V-shaped shaft guides (18) of the grip structure (6) and that sliding the grip structure (6) out of the locked position leads to the lifting arm (17) sliding up along a flank of the V-shaped shaft guide (18), whereby the clamping element (10) is moved away from the longitudinal axis of the vacuum cleaner suction tube (1).

11. Vacuum cleaner suction tube (1) according to claims 3 and 10, **characterized in that** the lifting arms (17) extend out of the sides of the housing (13).

12. Vacuum cleaner suction tube (1) according to any one of claims 1 to 9, **characterized in that** the actuating mechanism (5) includes a swivel bar (19), that the swivel bar (19) is in contact with the grip structure (6) and with the clamping element (10), so that sliding the grip structure (6) out of the locked position actuates the swivel bar (19), whereby the clamping element (10) is moved away from the longitudinal axis of the vacuum cleaner suction tube (1).

13. Vacuum cleaner suction tube (1) according to claim 12, **characterized in that** at least one initiating bevel (20) is provided and that the swivel bar (19) slides over the initiating bevel (20) when the grip structure (6) is moved out of the locked position, whereby the swivel bar (19) is actuated.

14. Vacuum cleaner suction tube (1) according to any one of claims 1 to 13, **characterized in that** the grip structure (6) encloses the entire circumference of the outer tube (3), in particular, that the grip structure (6) is designed as two pieces.

15. Vacuum cleaner suction tube (1) having at least one inner tube (2) and at least one outer tube (3), wherein the inner tube (2) has a plurality of retaining recesses (4), wherein an actuating mechanism (5) is arranged on the outer tube (3), wherein the actuating mechanism (5) includes at least one grip structure (6), one re-setting means (9), a clamping element (10) and two clamping wedges (11), wherein the grip structure (6) is slidably held in the longitudinal direction of the vacuum cleaner suction tube (1), so that the grip structure (6) is movable form one locked position into at least one unlocked position, wherein, in the locked position of the grip structure (6), the clamping element (10) keeps the clamping wedges (11) engaged with the retaining recesses (4) on the inner tube (2), wherein in the unlocked position, a sliding of the inner tube (2) relative to the outer tube (3) is enabled by the clamping wedge(11), and wherein, in a displacement of the grip structure (6) out of the locked position, the re-setting means (9) exerts a re-setting force for re-setting the grip structure (6) into the locked position, **characterized in that** the re-setting means (9) is designed as at least one arched leaf spring (9), which is deformed orthogonally to its arched shape by displacing the grip structure (6) and thereby exerts a re-setting force on the grip structure (6).

## Revendications

1. Tuyau d'aspiration pour aspirateur (1) avec au moins un tuyau intérieur (2) et au moins un tuyau extérieur (3), le tuyau intérieur (2) comportant une pluralité de renfoncements d'encliquetage (4), un mécanisme d'actionnement (5) étant disposé au niveau du tuyau extérieur (3), le mécanisme d'actionnement (5) comprenant au moins une coque de poignée (6), un moyen de rappel (9), un élément de coincement (10) et deux clavettes de coincement (11), la coque de poignée (6) étant maintenue de façon à pouvoir être coulissée dans la direction longitudinale du tuyau d'aspiration pour aspirateur (1), de sorte que la coque de poignée (6) puisse être déplacée d'une position de verrouillage dans au moins une position de déverrouillage, l'élément de coincement (10) maintenant, dans la position de verrouillage de la coque de poignée (6), les clavettes de coincement (11) en prise avec les renfoncements d'encliquetage (4) au niveau du tuyau intérieur (2), un coulissement du tuyau intérieur (2) par rapport au tuyau extérieur (3) étant libéré par les clavettes de coincement (11) dans la position de déverrouillage et le moyen de rappel (9) exerçant, en cas de sortie de la coque de poignée (6) hors de la position de verrouillage, une force de rappel par rapport au rappel de la coque de poignée (6) dans la position de verrouillage ;
**caractérisé en ce que** :
l'élément de coincement (10) est relié par complémentarité de formes aux clavettes de coincement (11), de sorte que les deux clavettes de coincement (11) puissent être coulissées simultanément par un mouvement de l'élément de coincement (10) et que l'élément de coincement (10) soit relié de telle sorte à la coque de poignée (6) que par un coulissement de la coque de poignée (6) hors de la position de verrouillage, l'élément de coincement (10) puisse être déplacé hors de l'axe longitudinal du tuyau d'aspiration pour aspirateur (1) et que par un mouvement de l'élément de coincement (10) hors de l'axe longitudinal du tuyau d'aspiration pour aspirateur (1), les deux clavettes de coincement (11) puissent être soulevées simultanément hors de prise avec les renfoncements d'encliquetage (4), rendant possible un coulissement du tuyau intérieur (2) par rapport au tuyau extérieur (3).

2. Tuyau d'aspiration pour aspirateur (1) selon la revendication 1, **caractérisé en ce que** le mécanisme d'actionnement (5) comprend en outre un ressort de coincement (12) et qu'un mouvement de l'élément de coincement (10) hors de l'axe longitudinal du tuyau d'aspiration pour aspirateur (1) se produit à l'encontre de la force du ressort de coincement (12).

3. Tuyau d'aspiration pour aspirateur (1) selon la revendication 1 ou 2, **caractérisé en ce qu'**un carter (13) est prévu entre la coque de poignée (6) et le tuyau extérieur (3) et que l'élément de coincement (10) et les deux clavettes de coincement (11) sont maintenus et guidés dans le carter (13).

4. Tuyau d'aspiration pour aspirateur (1) selon l'une quelconque des revendications 1 à 3, **caractérisé en ce que** le mécanisme d'actionnement (5) comprend un manchon de guidage (14) et que le manchon de guidage (14) est introduit du côté d'extrémité dans le tuyau extérieur (3), notamment encliqueté par complémentarité de formes avec le tuyau extérieur (3).

5. Tuyau d'aspiration pour aspirateur (3) selon la revendication 4, **caractérisé en ce que** le moyen de rappel (9) est fixé au manchon de guidage (14), notamment au moins fixé en partie par complémentarité de formes au manchon de guidage (14).

6. Tuyau d'aspiration pour aspirateur (1) selon l'une quelconque des revendications 1 à 5, **caractérisé en ce qu'**une saillie de réglage (15) est prévue au niveau de la coque de poignée (6), que la saillie de réglage (15) traverse le tuyau extérieur (3) dans un évidement et que la saillie de réglage (15) interagit avec le moyen de rappel (9) disposé dans le tuyau extérieur (3).

7. Tuyau d'aspiration pour aspirateur (1) selon l'une quelconque des revendications 1 à 6, **caractérisé en ce que** le moyen de rappel (9) est réalisé sous la forme d'au moins un ressort à lames, notamment d'au moins un ressort à lames en forme d'arc sollicité perpendiculairement à sa forme d'arc.

8. Tuyau d'aspiration pour aspirateur (1) selon l'une quelconque des revendications 2 à 7, **caractérisé en ce que** le ressort de coincement (12) est réalisé sous la forme d'un ressort à lames, notamment d'un ressort à lames à double position.

9. Tuyau d'aspiration pour aspirateur (1) selon l'une quelconque des revendications 1 à 8, **caractérisé en ce que** l'élément de coincement (10) est réalisé sous la forme d'une plaque de coincement comprenant deux bras de réglage (16) disposés dans un plan commun et que respectivement un bras de réglage (16) s'engrène par complémentarité de formes dans une clavette de coincement (11), notamment que les bras de réglage (16) sont orientés parallèlement à l'extension longitudinale du tuyau d'aspiration pour aspirateur (1).

10. Tuyau d'aspiration pour aspirateur (1) selon l'une quelconque des revendications 2 à 9, **caractérisé en ce que** l'élément de coincement (10) comporte deux bras de levage (17) orientés perpendiculairement à l'extension longitudinale du tuyau d'aspiration pour aspirateur (1), que les bras de levage (17) s'engrènent dans des guides (18) correspondants en forme de V prévus dans la coque de poignée (6) et qu'un coulissement de la coque de poignée (6) hors de la position de verrouillage provoque le glissement des bras de levage (17) au niveau d'un flanc du guide (18) en forme de V, déplaçant l'élément de coincement (10) hors de l'axe longitudinal du tuyau d'aspiration pour aspirateur (1).

11. Tuyau d'aspiration pour aspirateur (1) selon la revendication 3 et 10, **caractérisé en ce que** les bras de levage (17) s'étendent en côté hors du carter (13).

12. Tuyau d'aspiration pour aspirateur (1) selon l'une quelconque des revendications 1 à 9, **caractérisé en ce que** le mécanisme d'actionnement (5) comprend un étrier pivotant (19), que l'étrier pivotant (19) est relié à la coque de poignée (6) et à l'élément de coincement (10), de sorte que l'étrier pivotant (19) soit actionné par un coulissement de la coque de poignée (6) hors de la position de verrouillage, l'élément de coincement (10) étant déplacé hors de l'axe longitudinal du tuyau d'aspiration pour aspirateur (1).

13. Tuyau d'aspiration pour aspirateur (1) selon la revendication 12, **caractérisé en ce qu'**au moins un biseau d'attaque (20) est prévu au niveau de la coque de poignée (6) et que l'étrier pivotant (19) glisse au-dessus du biseau d'attaque (20) en cas de coulissement de la coque de poignée (6) hors de la position de verrouillage, actionnant ainsi l'étrier pivotant (19).

14. Tuyau d'aspiration pour aspirateur (1) selon l'une quelconque des revendications 1 à 13, **caractérisé en ce que** la coque de poignée (6) entoure le tuyau extérieur (3) sur l'ensemble de sa périphérie, notamment que la coque de poignée (6) est réalisée en deux parties.

15. Tuyau d'aspiration pour aspirateur (1) avec au moins un tuyau intérieur (2) et au moins un tuyau extérieur (3), le tuyau intérieur (2) comportant une pluralité de renfoncements d'encliquetage (4), un mécanisme d'actionnement (5) étant disposé au niveau du tuyau extérieur (3), le mécanisme d'actionnement (5) comprenant au moins une coque de poignée (6), un moyen de rappel (9), un élément de coincement (10) et deux clavettes de coincement (11), la coque de poignée (6) étant maintenue de façon à pouvoir être coulissée dans la direction longitudinale du tuyau d'aspiration pour aspirateur (1), de sorte que la coque de poignée (6) puisse être déplacée d'une position de verrouillage jusque dans au moins une position de déverrouillage, l'élément de coincement (10) maintenant, dans la position de verrouillage de la coque de poignée (6), les clavettes de coincement (11) en prise avec les renfoncements d'encliquetage (4) au niveau du tuyau intérieur (2), un coulissement du tuyau intérieur (2) par rapport au tuyau extérieur (3) étant libéré par les clavettes de coincement (11) dans la position de déverrouillage et le moyen de rappel (9) exerçant, en cas de sortie de la coque de poignée (6) hors de la position de verrouillage, une force de rappel servant au rappel de la coque de poignée (6) dans la position de verrouillage, **caractérisé en ce que** le moyen de rappel (9) est réalisé sous la forme d'au moins un ressort à lames (9) en forme d'arc déformé, en cas de déviation de la coque de poignée (6), perpendiculairement à sa forme d'arc et qu'il exerce ainsi une force de rappel sur la coque de poignée (6).
